# EUROPEAN PATENT APPLICATION

(11) **EP 2 429 123 A1**
(43) Date of publication of application: **14.03.2012**
(21) Application number: 10782948.3
(22) Date of filing: 25.05.2010
(51) Int. Cl.: H04L 12/24

(54) **METHOD, APPARATUS AND DEVICE FOR ADJUSTING RESOURCE DELEGATION IN NETWORK**

(30) Priority: 02.06.2009 CN 200910107558
(71) Applicant: Huawei Technologies Co., Ltd., Shenzhen, Guangdong 518129 (CN)
(72) Inventor: HUANG, Fuqing, Shenzhen Guangdong 518129 (CN)
(74) Representative: Körber, Martin Hans
(86) International application number: PCT/CN2010/073179
(87) International publication number: WO 2010/139244

(57) **Abstract**

A method, an apparatus, and a device for adjusting resource delegation in a network are provided. A first network device and a second network device coordinate and manage resource, so that the second network device can release resource occupied by services that are capturable, and allocate the resource to high-priority services which request the resource according to a resource delegation adjustment request message and resource delegation information carried in the resource delegation adjustment request message, which solves the problem that the resource usage of the high-priority services is not able to be satisfied in the case of insufficient resource, improves the utilization efficiency of the resource, and therefore enhances user experience.

## Description

The application claims priority to Chinese Patent Application No. 200910107558.9, filed with the Chinese Patent Office on June 2, 2009, and entitled "METHOD, APPARATUS AND SYSTEM FOR ADJUSTING RESOURCE DELEGATION IN NETWORK", which is incorporated herein by reference in its entirety.

### FIELD OF THE INVENTION

The present invention relates to network security technologies in the communications field, and in particular, to a method, an apparatus and a system for adjusting resource delegation in a network.

### BACKGROUND OF THE INVENTION

A Network Resource Manager (NRM) refers to a logic function entity for managing network resource (for example, bandwidth), which can be deployed on various network nodes such as a Resource and Admission Control Sub-system (RACS), a Broadband Network Gateway (BNG), a Broadband Remote Access Server (BRAS), a Network Access Server (NAS), an Optical Line Terminal (OLT), a Digital Subscriber Line Access Multiplexer (DSLAM), an Optical Network Unit (ONU), a home gateway, a packet data network gateway, a serving gateway, and a network management system. Two NRMs can manage the network resource together by means of resource delegation. The so-called resource delegation mode means that, one NRM delegates a batch of resource to the other NRM for management, and the NRM to which the resource are delegated allocates resource according to usage of the delegated resource. For the convenience of description, "Delegating NRM" is used herein to represent the NRM delegating the resource, and "Delegated NRM" is used to represent the NRM to which the resource is delegated. The interaction between the Delegating NRM and the Delegated NRM occurs under such situations:
1) when the Delegating NRM decides to delegate a batch of resource to the Delegated NRM;
2) the Delegating NRM decides to increase or decrease the delegated resource, and the Delegating NRM sends a resource delegation adjustment request for increasing or decreasing the delegated resource to the Delegated NRM; and
3) the Delegated NRM decides to increase or decrease the delegated resource, and the Delegated NRM sends a resource delegation adjustment request for increasing or decreasing the delegated resource to the Delegating NRM.

In the following, a method for resource delegation in the prior art is described by taking a segment of a logical or physical network path (for example, a subscriber access line) in a network as an example. It is assumed that the bandwidth of the network path is 20 M, and for the convenience of description, the network path is labeled as samplepath. The Delegating NRM and the Delegated NRM manage resource of the samplepath together by means of resource delegation. It is assumed that the Delegating NRM is deployed on the NAS and responsible for allocating resource for unicast services, and the Delegated NRM is deployed on the AN and responsible for allocating resource for multicast services. The process of resource delegation is embodied below by describing resource operations of the Delegating NRM and the Delegated NRM on the samplepath.

At the beginning, the Delegating NRM delegates 8 M of the bandwidth of the samplepath to the Delegated NRM for management, and the Delegating NRM manages the remaining 12 M of the bandwidth of the samplepath. The current resource state of the samplepath is that: the Delegating NRM manages 12 M of the bandwidth of the samplepath, in which the idle bandwidth is 12 M, and the used bandwidth is 0 M; and the Delegated NRM manages 8 M of the bandwidth of the samplepath, in which the idle bandwidth is 8 M, and the used bandwidth is 0 M.

When the Delegating NRM receives a new unicast service (such as VoD or VoIP) resource request, which is referred to as unicast_req1, the unicast_req1 requires 5 M of the bandwidth on the samplepath. The Delegating NRM checks and finds that 12 M of idle bandwidth exists in the 12 M of the bandwidth of the samplepath managed by itself, which satisfies the demand of the unicast_req1, and therefore admits the unicast_req1 and allocates 5 M of the bandwidth on the samplepath to the unicast_req1. In this process, the Delegating NRM does not require interaction with the Delegated NRM. After the unicast_req1 is admitted, the resource state of the samplepath is that: the Delegating NRM manages 12 M of the bandwidth of the samplepath, in which the idle bandwidth is 7 M, the used bandwidth is 5 M, and the unicast_req1 occupies 5 M of the bandwidth; and the Delegated NRM manages 8 M of the bandwidth of the samplepath, in which the idle bandwidth is 8 M, and the used bandwidth is 0 M.

When the Delegated NRM receives a new multicast service (such as BTV) resource request, which is referred to as multicast_req1, the multicast_req1 requires 2 M of the bandwidth on the samplepath. The Delegated NRM checks and finds that 8 M of idle bandwidth exists in the 8 M of the bandwidth of the samplepath managed by itself, which satisfies the demand of the multicast_req1, and therefore admits the multicast_req1 and allocates 2 M of the bandwidth on the samplepath to the multicast_req1. In this process, the Delegated NRM does not require interaction with the Delegating NRM. After the multicast_req1 is admitted, the resource state of the samplepath is that: the Delegating NRM manages 12 M of the bandwidth of the samplepath, in which the idle bandwidth is 1 M, the used bandwidth is 11 M, the unicast_req1 occupies 5 M of the bandwidth, and unicast_req2 occupies 6 M of the bandwidth; and the Delegated NRM manages 8 M of the bandwidth of the samplepath, in which the idle bandwidth is 6 M, the used bandwidth is 2 M, and the multicast_req1 occupies 2 M of the bandwidth.

When the Delegating NRM receives a new unicast service resource request, which is referred to as unicast_req2, the unicast_req2 requires 10 M of the bandwidth on the samplepath. The Delegating NRM checks and finds that 7 M of idle bandwidth exists in the 12 M of the bandwidth of the samplepath managed by itself, which is not able to satisfy the demand of the unicast_req2. To satisfy the demand of the unicast_req2, the Delegating NRM requires at least 3M of idle bandwidth on the samplepath. The Delegating NRM sends, to the Delegated NRM, a resource delegation adjustment request for decreasing the bandwidth on the samplepath delegated to the Delegated NRM for management to (8 M-3 M), that is, 5M. After receiving the request, the Delegated NRM checks and finds that only 2 M of idle bandwidth in the 8 M of the bandwidth of the samplepath managed by itself is used and that a current service is not affected if the bandwidth of the samplepath managed by itself is decreased to 5M, and therefore decreases the bandwidth of the samplepath managed by itself to 5M, and sends a resource delegation adjustment success response to the Delegating NRM. After receiving the resource delegation adjustment success response of the Delegated NRM, the Delegating NRM increases the bandwidth of the samplepath managed by itself to 15M. At this time, the resource state of the samplepath is that: the Delegating NRM manages 15 M of the bandwidth of the samplepath, in which the idle bandwidth is 0M, the used bandwidth is 15M, and the unicast_req1 occupies 5M of the bandwidth; and the Delegated NRM manages 5M of the bandwidth of the samplepath, in which the idle bandwidth is 3M, the used bandwidth is 2M, and the multicast_req1 occupies 2M of the bandwidth. At this time, the Delegating NRM checks and finds that 10M of idle bandwidth exists in the 15M of the bandwidth of the samplepath managed by itself, which is able to satisfy the demand of the unicast_req2, and therefore admits the unicast_req2 and allocates 10M of the bandwidth on the samplepath to the unicast_req2. After the unicast_req2 is admitted, the resource state of the samplepath is that: the Delegating NRM manages 15M of the bandwidth of the samplepath, in which the idle bandwidth is 0M, and the used bandwidth is 15M; and the Delegated NRM manages 5M of the bandwidth of the samplepath, in which the idle bandwidth is 3M, the used bandwidth is 2M, and the multicast_req1 occupies 2M of the bandwidth.

When the Delegating NRM receives a new unicast service resource request, which is referred to as unicast_req3, the unicast_req3 requires 5M of the bandwidth on the samplepath. The Delegating NRM checks and finds that 0M of idle bandwidth exists in the 15M of the bandwidth of the samplepath managed by itself, which is not able to satisfy the demand of the unicast_req3. To satisfy the demand of the unicast_req3, the Delegating NRM requires at least (4 M-0 M), that is, 3M of idle bandwidth on the samplepath. The Delegating NRM sends, to the Delegated NRM, a resource delegation adjustment request for decreasing the bandwidth on the samplepath delegated to the Delegated NRM for management to (5 M-4 M), that is, 1M. After receiving the request, the Delegated NRM checks and finds that only 2M of idle bandwidth in the 5M of the bandwidth of the samplepath managed by itself is used and that a current service is affected if the bandwidth of the samplepath managed by itself is decreased to 1M, and therefore refuses to decrease the bandwidth of the samplepath managed by itself to 1M, and sends a resource delegation adjustment failure response to the Delegating NRM.

During the process of implementing the present invention, the inventor finds that the prior art at least has the following problems:

In the prior art, when the Delegated NRM requests the Delegating NRM to increase the delegated resource, more resource can be delegated to the Delegated NRM if the Delegating NRM has sufficient idle resource. If the Delegating NRM does not have sufficient idle resource, more resource cannot be delegated to the Delegated NRM, and the demand of the network on differentiation of service priority or urgency is not able to be satisfied. For example, when current resource of the Delegating NRM are all occupied by low priority service resource requests (for example, low-value and non-urgent service resource requests), and the resource of the Delegated NRM are all occupied by high-priority services, if the Delegated NRM receives a new high priority service resource request at the moment, the Delegated NRM does not have sufficient idle resource to satisfy the resource request, the Delegated NRM requests the Delegating NRM to increase the delegated resource, but the Delegating NRM is not able to delegate more resource to the Delegated NRM due to insufficient idle resource, and as a result, the Delegated NRM may refuse the resource request due to insufficient idle resource.

### SUMMARY OF THE INVENTION

In view of the above, embodiments of the present invention provide a method, an apparatus and a system for adjusting resource delegation in a network, so as to satisfy high-priority services in the case of insufficient resource, thereby improving network security and user experience.

To achieve the objective, embodiments of the present invention provide the following technical solutions.

A method for adjusting resource delegation in a network is provided, where the method includes:
receiving a resource delegation adjustment request message sent by a first network device, in which the request message is used to perform resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of a service requesting resource; determining a service that is capturable by the service which requests resource according to the resource delegation information carried in the request message; and releasing resource occupied by the service that is capturable, and delegating the released resource to the first network device for management through a resource delegation adjustment response message.

A method for adjusting resource delegation in a network is provided, where the method includes:
receiving a service resource request message, in which the service resource request message is used to request allocating of required resource to a service; judging whether managed idle resource satisfies requirement of the service according to the service resource request message; determining the number of resource requiring resource delegation adjustment if the managed idle resource is not able to satisfy the requirements of the service; and sending a resource delegation adjustment request message to a second network device, in which the request message is used to perform the resource delegation adjustment on resource managed by a first network device, the resource delegation adjustment request message carries resource delegation information, and the resource delegation information includes: resource identifier of resource on which the first network device requires performing of delegation adjustment, the number of the resource requiring the delegation adjustment, and priority information of the service.

An apparatus for adjusting resource delegation in a network is provided, where the apparatus includes:
a receiving unit, configured to receive a resource delegation adjustment request message sent by a first network device, in which the request message is used to perform resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of service which requests resource; a first determining unit, configured to determine a service that is capturable by the a service which requests resource, according to the resource delegation information carried in the request message; and a delegation obtaining unit, configured to release resource occupied by the a service that is capturable, and delegate the released resource to the first network device for management through a resource delegation adjustment response message.

An apparatus for adjusting resource delegation in a network is provided, where the apparatus includes:
a first receiving unit, configured to receive a service resource request message, in which the service resource request message is used to request allocating of required resource to a service; a judging unit, configured to judge whether managed idle resource satisfies requirement of the service according to the service resource request message; a determining unit, configured to determine the number of resource requiring resource delegation adjustment if a judgment result of the judging unit is that the managed idle resource is not able to satisfy the requirements of the service; a sending unit, configured to send a resource delegation adjustment request message to a second network device, in which the message is used to request performing of resource delegation adjustment on managed resource; and a carrying unit, configured to carry resource delegation information in the resource delegation adjustment request message sent by the sending unit, in which the resource delegation information includes: resource identifier of the resource requiring delegation adjustment, the number of the resource requiring the delegation adjustment, and priority information of the service.

A system for adjusting resource delegation in a network is provided, where the system includes:
a first network device, configured to receive a service resource request message, in which the service resource request message is used to request allocating of required resource to a service; determine the number of resource requiring resource delegation adjustment when idle resource managed by the first network device is not able to satisfy requirements of the service; and send a resource delegation adjustment request message to a second network device, in which the request message is used to request the second network device to perform resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of the service; and
the second network device, configured to receive the resource delegation adjustment request message sent by the first network device, determine a service that is capturable by a service according to the resource delegation information carried in the request message; and release resource occupied by the service that is capturable, and delegate the released resource to the first network device for management through a resource delegation adjustment response message.

In view of the specific implementation solutions according to the embodiments of the present invention, the second network device receives the resource delegation adjustment request message sent by the first network device, determines a service that is capturable by the resource delegation adjustment request according to the resource delegation information carried in the request message; and releases the resource occupied by the service, and delegates the released resource to the first network device for management through the resource delegation adjustment response message, which solves the problem that the resource usage of the high-priority services is not able to be satisfied in the case of insufficient resource, improves the utilization efficiency of the resource, and enhances user experience.

### BRIEF DESCRIPTION OF THE DRAWINGS

FIG. 1 is a flow chart of a method for adjusting resource delegation in a network according to an embodiment of the present invention;
FIG. 2 is a flow chart of another method for adjusting resource delegation in a network according to an embodiment of the present invention;
FIG. 3 is a flow chart of specific implementation for resource delegation adjustment in a network according to an embodiment of the present invention;
FIG. 4 is a schematic structural view of an apparatus for adjusting resource delegation in a network according to an embodiment of the present invention;
FIG. 5 is a schematic structural view of another apparatus for adjusting resource delegation in a network according to an embodiment of the present invention; and
FIG. 6 is a schematic structural view of a system for adjusting resource delegation in a network according to an embodiment of the present invention.

### DETAILED DESCRIPTION OF THE EMBODIMENTS

In order to make the obj ectives, technical solutions, and advantages of the present invention more comprehensible, the embodiments of the present invention are further described in detail below with reference to the accompanying drawings.

It should be noted that, the embodiments to be described are only a part rather than all of the embodiments of the present invention. All other embodiments derived by persons skilled in the art based on the embodiments of the present invention without creative activities should fall within the protection scope of the present invention.

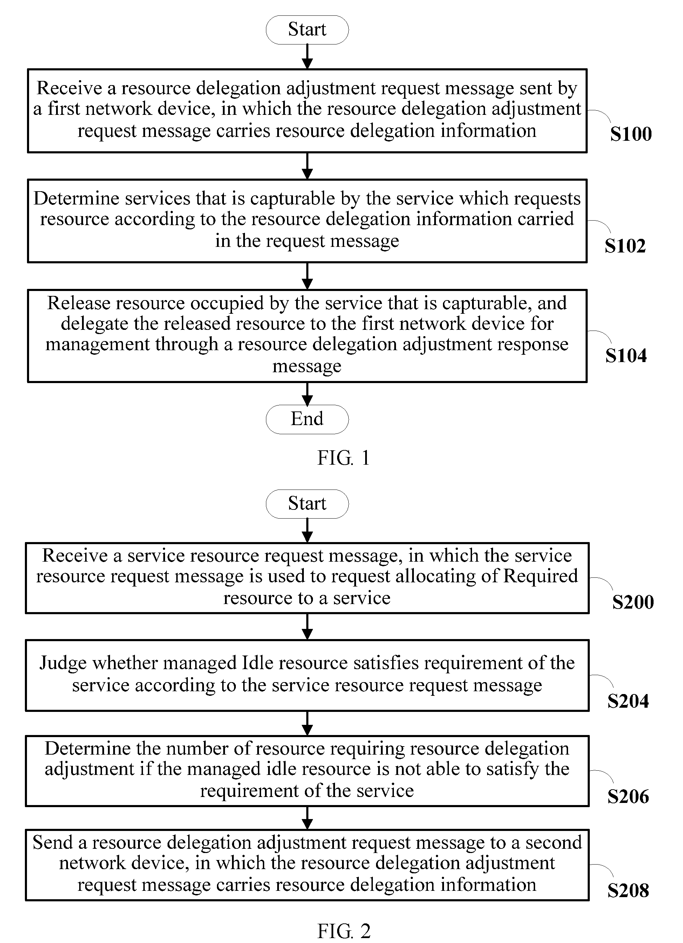

FIG. 1 is a flow chart of a method for adjusting resource delegation in a network according to an embodiment of the present invention, where the method includes the following:
Step S100: Receive a resource delegation adjustment request message sent by a first network device, in which the request message is used to perform resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of a service which requests resource.

The resource delegation information further includes priority information of services admitted by the first network device, and/or resource information; and the resource information includes any combination of resource identifiers corresponding to services admitted or managed by the first network device, the number of required resource and required resource features (such as delay, jitter, and packet loss ratio).

Step S102: Determine a service that is capturable by the service which requests resource according to the resource delegation information carried in the request message.

Before step S102, the method further includes: determine that managed idle resource is not able to satisfy the resource delegation adjustment request.

Step S104: Release resource occupied by the service that is capturable, and delegating the released resource to the first network device for management through a resource delegation adjustment response message.

The delegating the released resource to the first network device for management through the resource delegation adjustment response message includes: delegating the managed idle resource and the released resource to the first network device for management through the resource delegation adjustment response message.

It can be seen from the specific implementation solution provided by the embodiment of the present invention that, the second network device receives the resource delegation adjustment request message sent by the first network device, determines a service that is capturable by the resource delegation adjustment request according to resource information carried in the message; and releases resource occupied by the service that is capturable, and delegates the released resource to the first network device for management. In this way, the problem that the resource usage of the high-priority services is not able to be satisfied in the case of insufficient resource is solved, the utilization efficiency of the resource is improved, and therefore user experience is enhanced.

FIG. 2 is a flow chart of another method for adjusting resource delegation in a network according to an embodiment of the present invention, where the method includes the following:
Step S200: Receive a service resource request message, in which the service resource request message is used to request allocating of required resource to a service.
Step S204: Judge whether managed idle resource satisfies requirement of the service according to the service resource request message.
Step S206: Determine the number of resource requiring resource delegation adjustment if the managed idle resource is not able to satisfy the requirement of the service.
Step S208: Send a resource delegation adjustment request message to a second network device, in which the request message is used to request performing of resource delegation adjustment on resource managed by a first network device, the resource delegation adjustment request message carries resource delegation information, and the resource delegation information includes: resource identifier of resource on which the first network device requires performing of delegation adjustment, the number of the resource requiring the delegation adjustment, and priority information of the service.

The resource delegation adjustment request message further carries priority information of services admitted by the first network device, and/or resource information; and the resource information includes any combination of resource identifiers corresponding to services admitted or managed by the first network device, the number of required resource and required resource features (such as delay, jitter, and packet loss ratio).

After step S208, the method further includes:
receiving a resource delegation adjustment response message returned by the second network device; and
updating the number of the managed resource and allocating resource to the service according to the response message.

It can be seen from the specific implementation solution provided by the embodiment of the present invention that, the first network device receives a service resource request message; judges whether managed idle resource satisfies requirement of the service according to the service resource request message; determines the number of resource satisfying the requirements of the services and requiring resource delegation adjustment if the managed idle resource is not able to satisfy the requirements of the service; and sends a resource delegation adjustment request message to a second network device, so that the first network device can preferentially satisfy high-priority services in the case of insufficient resource through resource negotiation with resource the second network device. In this way, the utilization efficiency of the resource is improved, and therefore user experience is enhanced.

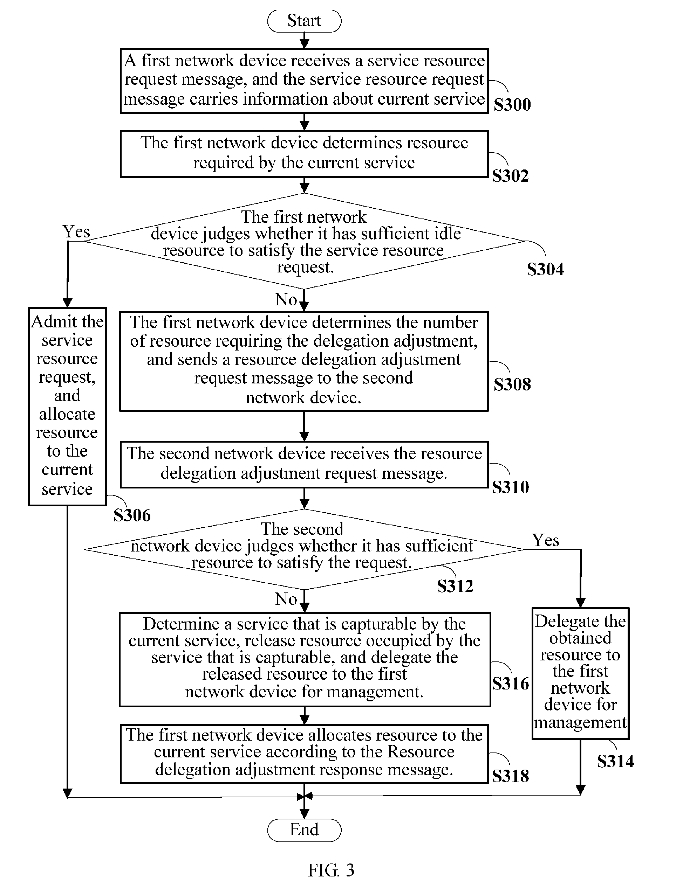

FIG. 3 is a flow chart of specific implementation for resource delegation adjustment in a network according to an embodiment of the present invention.

In the embodiment of the present invention, a first network device and a second network device manage network resource together by means of resource delegation, and the network devices may be NRMs, or other network devices. In specific implementation, the first network device may be a device delegating resource, for example, Delegating NRM, the second network device then is a device to which resource are delegated, and the network device is a Delegated NRM correspondingly. The first NRM may also be the Delegated NRM, and the second NRM then is the Delegating NRM correspondingly.

Step S300: A first network device receives a service resource request message, and the service resource request message carries information about current service.

The service resource request message is used to request allocating of resource to a service, and the service may be unicast service or multicast service such as broadcast television (BTV) or Video on Demand (VoD). For the convenience of description, the service corresponding to the service resource request message is referred to as current service.

Step S302: The first network device determines resource required by the current service.

The process that the first network device determines resource required by the current service actually means determining a resource identifier corresponding to resource required by the service resource request and the number of the resource. For example, the first network device determines that the service resource request requires 50M resource whose resource identifier is LSP1. Herein, the resource identifier refers to a physical or logical identifier of the network resource, such as a port number and an LSP identifier, and the resource identifier can be understood by both the first network device and the second network device. The first network device and the second network device identify resource requiring resource delegation adjustment in follow-up operations according to the resource identifier. In addition, a same service resource request may require resource corresponding to one or more resource identifiers, for example, a same service resource request may require multiple segments of resource at the same time, such as resource from a user equipment (UE) to an access node (AN) and resource from the AN to a Broadband Remote Access Server BRAS (BRAS), and the resource identifier corresponds to resource on multiple segments of lines. Herein, it is discussed that the service resource request only requires resource corresponding to one resource identifier, and the case that processing on resource corresponding to more resource identifiers can be deduced accordingly.

Step S304: The first network device judges whether resource managed by itself has sufficient idle resource to satisfy the service resource request.

For example, on the assumption that the first network device determines that the current service resource request requires 50M resource whose resource identifier is LSP1, the first network device judges whether there is idled resource not less than 50M in the resource with the resource identifier LSP1 that are managed by the first network device; if yes, step S306 is performed; if no, steps S308 to S316 are performed.

Step S306: If yes, the first network device admits the service resource request, allocates resource to the current service, and responds to the requester. The process ends.

Step S308: If no, the first network device determines the number of resource requiring the delegation adjustment, and sends a resource delegation adjustment request message to the second network device.

The resource delegation adjustment request message carries resource delegation information, and the resource delegation information includes: resource identifier of resource on which the first network device requires performing of delegation adjustment, the number of the resource requiring the delegation adjustment, and priority information of the current service.

The resource delegation adjustment request message further carries priority information of services admitted by the first network device, and/or resource information; and the resource information includes any combination of resource identifiers corresponding to services admitted or managed by the first network device, the number of required resource and required resource features (such as delay, jitter, and packet loss ratio).

In specific implementation, when the first network device is the Delegating NRM, the resource delegation adjustment request message is a resource delegation adjustment request for decreasing resource delegated to the Delegated NRM for management. When the first network device is the Delegated NRM, the resource delegation adjustment request message is a resource delegation adjustment request for increasing resource delegated to the Delegated NRM for management.

The resource delegation adjustment request message may further carry priority information of the service resource request, for example, priority information such as an emergency sign, a reserved priority, and a preempted priority of the service resource request.

Optionally, the first network device may also compare the priority of the current service with the priority of services that are admitted by the first network device and that occupy the resource corresponding to the resource identifier, determine, according to a rule of preferentially ensuring resource of high-priority services, a service whose resource is capturable by the current service, and carry information about the service that is capturable by the current service in the resource delegation adjustment request message, for example, priority information of the service that is capturable, and information about the number of resource occupied by the service that is capturable.

Step S310: The second network device receives the resource delegation adjustment request message.

Step S312: The second network device judges whether managed idle resource satisfies the resource delegation adjustment request according to the resource delegation adjustment request message; if yes, step S314 is performed; otherwise, steps S316 and S318 are performed.

Step S314: The second network device obtains resource satisfying the resource delegation adjustment request, and delegates the obtained resource to the first network device for management through a resource delegation adjustment response message.

Specifically, if the resource managed by the second network device and corresponding to the resource identifier carried in the resource delegation adjustment request message has sufficient idle resource to satisfy the resource delegation adjustment request message, processing of step S314 is performed.

Optionally, the second network device may carry relevant values of the resource delegation adjustment in the resource delegation adjustment response message, such as the number of the increased or decreased delegated resource, the number of resource that can be managed by the first network device, and the number of resource that can be managed by the second network device.

Step S316: Determine a service in the second network device that is capturable by the resource delegation adjustment request according to resource information carried in the resource delegation adjustment request message, release resource occupied by the service that is capturable, and delegate the released resource to the first network device for management through the resource delegation adjustment response message.

Specifically, if the resource managed by the second network device and corresponding to the resource identifier carried in the resource delegation adjustment request message does not have sufficient idle resource to satisfy the resource delegation adjustment request, and the resource delegation adjustment request message carries priority information of the current service but does not carry information of a service that is capturable by the current service, the second network device compares the priority of the services that are admitted and that occupy the resource corresponding to the resource identifier carried in the resource delegation adjustment request message with the priority of the current service carried in the resource delegation adjustment request message, determines services that are capturable by the current service according to a rule of preferentially ensuring high-priority services, and releases resource occupied by the services that are capturable, until the second network device satisfies the resource delegation adjustment request, and then the second network device performs resource delegation adjustment according to an indication of the resource delegation adjustment request, and sends a resource delegation adjustment response message to the first network device.

Optionally, the second network device may carry relevant values of the resource delegation adjustment in the resource delegation adjustment response message, such as the number of the increased or decreased delegated resource, the number of resource that can be managed by the first NRM, and the number of resource that can be managed by the second network device.

If the resource managed by the second network device and corresponding to the resource identifier carried in the resource delegation adjustment request message does not have sufficient idle resource to satisfy the resource delegation adjustment request, and the resource delegation adjustment request message carries priority information of the current service and information of services that is capturable by the current service, the second network device compares the priority of the services that are admitted by itself and that occupy the resource corresponding to the resource identifier carried in the resource delegation adjustment request message with the priority of the current service, determines services that are capturable by the current service according to a rule of preferentially ensuring high-priority services, and sends a resource delegation adjustment response message to the first network device.

Optionally, the second network device may carry relevant values of the resource delegation adjustment in the resource delegation adjustment response message, such as the number of the increased or decreased delegated resource, the number of resource that can be managed by the first network device, and the number of resource that can be managed by the second network device.

Step S318: The first network device allocates resource to the current service according to the resource delegation adjustment response message.

To better understand the solution of the embodiment, descriptions are provided below with specific examples.

For example, an NAS and an AN may be logically regarded as two NRMs that manage resource of one subscriber access line together, in which Line1 is the resource identifier of the subscriber access line (the resource identifier of the subscriber access line is usually represented with a combination of elements such as a node identifier, a slot number, and a port number of the AN). It is assumed that the total bandwidth of Line1 is 100M, in which the NAS manages 60M bandwidth on Line1 currently, and the AN manages the remaining bandwidth on Line1, that is, 40M bandwidth. It is assumed that the usage of the 60M bandwidth managed by the NAS currently is as follows: the idle bandwidth is 10M, request a with the priority being 1 occupies 10M bandwidth, request b with the priority being 2 occupies 15M bandwidth, request c with the priority being 2 occupies 10M bandwidth, and request d with the priority being 3 occupies 15M bandwidth. It is assumed that the usage of the 40M bandwidth managed by the AN currently is as follows: the idle bandwidth is 5M, request h with the priority being 1 occupies 5M bandwidth, request i with the priority being 1 occupies 5M bandwidth, request j with the priority being 2 occupies 5M bandwidth, request k with the priority being 2 occupies 10M bandwidth, request 1 with the priority being 2 occupies 5M bandwidth, and request m with the priority being 3 occupies 5M bandwidth. If the NAS receives a new resource request, the preempted priority of the new request is 2 (that is, the request can capture resource occupied by the requests with the priority being 2 or smaller than 2), the new request requires 30M bandwidth on Line1, and the specific processing steps are provided as follows:
Step A: The NAS checks and finds that the current idle bandwidth of the 60M bandwidth managed by itself on Line1 is 10M. Because the idle bandwidth is less than the bandwidth required by the new request, the NAS further requires (30M-10M), namely, 20M extra bandwidth. The 20M extra bandwidth may be obtained by preempting resource of the following requests: 10M bandwidth of the request a with the priority being 1, and 10M bandwidth of the request b with the priority being 2. The 20M extra bandwidth may also be obtained through negotiation with the AN. The NAS sends a resource negotiation message to the AN, and carries the following information in the message: minimum bandwidth 20M expected to be increased, 10M bandwidth with the priority being 1 that is capturable on the NAS, and 10M bandwidth with the priority being 2 that is capturable on the NAS (although the NAS has the bandwidth more than 10M with the priority being 2 that is capturable, the new request can be satisfied only with 10M, and therefore it is unnecessary to provide more bandwidths that is capturable).
Step B: After receiving the resource negotiation request of the NAS, the AN checks and finds that the current idle bandwidth of 40M bandwidth managed by itself on Line1 is 5M, and therefore the AN further requires (20M-5M), namely, 15M extra bandwidth. The AN combines the bandwidth that is capturable on the NAS with its bandwidth that is capturable and determines that: the required 15M extra bandwidth can be obtained by preempting 10M of the bandwidth with the priority being 1 on the NAS and 5M of the bandwidth occupied by the request h with the priority being 1 on the AN. The AN releases resource occupied by the request h, modifies the bandwidth managed by itself on Line1 as 30M, sends a resource negotiation response message to the NAS, and indicates in the message that 10 M idle bandwidth (including the original 5 M idle bandwidth and the other 5M idle bandwidth obtained by releasing the request h) is transferred to the NAS for management in the negotiation.
Step C: After receiving the resource negotiation response of the AN, the NAS modifies the bandwidth managed by itself on Line1 as (60M+10M), namely, 70M, and the idle bandwidth is increased from the original 10M to (10M+10M), namely, 20M. The NAS releases 10M of the bandwidth occupied by the request a to obtain 10M idle bandwidth, so as to finally obtain 30M idle bandwidth, thereby satisfying the bandwidth required by the new request. The NAS allocates the 30M idle bandwidth to the new request, and sends a resource request response message to the requester.

It can be seen from the specific implementation solution provided by the embodiment of the present invention that, the first network device and the second network device can determine services that are capturable according to priority information of the services, and release resource occupied by the services, so as to perform resource delegation adjustment, which preferentially ensures high-priority services in the resource delegation adjustment process, and therefore improves the utilization efficiency of the resource and user experience.

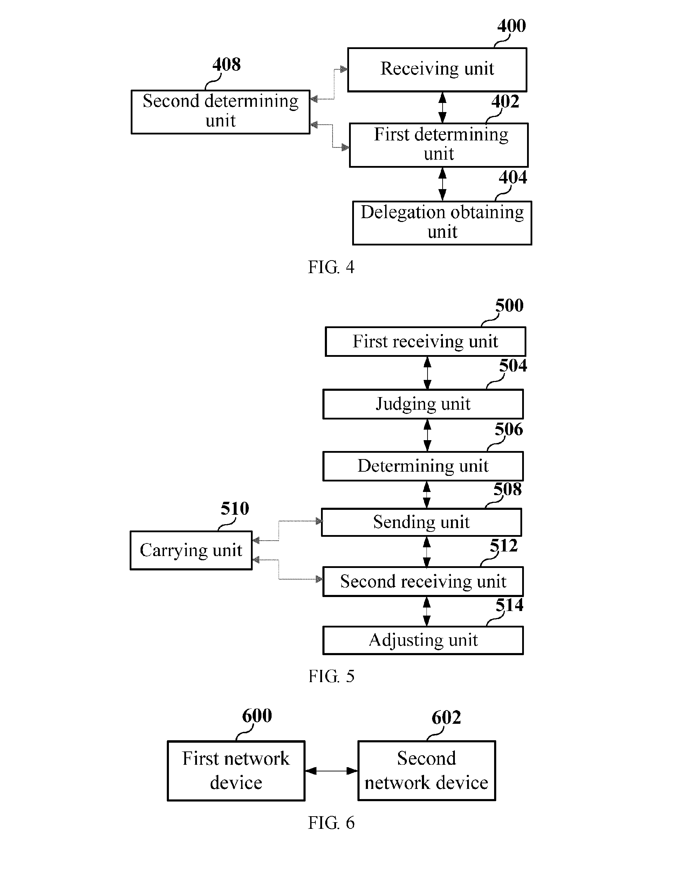

FIG. 4 is a schematic structural view of an apparatus for adjusting resource delegation in a network according to an embodiment of the present invention, which is used to implement the method embodiments of the present invention.

An apparatus for adjusting resource delegation in a network is provided, where the apparatus includes:
a receiving unit 400, configured to receive a resource delegation adjustment request message sent by a first network device, in which the request message is used to request performing of resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of a service which requests resource;
in which the resource delegation information further includes: priority information of services admitted by the first network device, and/or resource information; and the resource information includes any combination of resource identifiers corresponding to services admitted or managed by the first network device, the number of required resource and required resource features (such as delay, jitter, and packet loss ratio);
a first determining unit 402, configured to determine a service that is capturable by the service which requests resource according to the resource delegation information carried in the resource delegation adjustment request message; and
a delegation obtaining unit 404, configured to release resource occupied by the service that is capturable, and delegate the released resource to the first network device for management through a resource delegation adjustment response message.

The apparatus further includes:
a second determining unit 408, connected to the receiving unit 400 and the first determining unit 402 respectively, and configured to determine that managed idle resource is not able to satisfy the resource delegation adjustment request,
in which the delegation obtaining unit is further configured to delegate the managed idle resource and the released resource to the first network device for management through the resource delegation adjustment response message.

The apparatus may be an NRM, or other network devices.

It can be seen from the specific implementation solution provided by the embodiment of the present invention that, the apparatus for adjusting the resource delegation in the network according to the embodiment of the present invention can solve the problem of the existing technical solution that the resource usage of the high-priority services is not able to be satisfied in the case of insufficient resource, which improves the utilization efficiency of the resource, and enhances user experience.

FIG. 5 is a schematic structural view of another apparatus for adjusting resource delegation in a network according to an embodiment of the present invention, which is used to implement the method embodiment of the present invention.

An apparatus for adjusting resource delegation in a network is provided, where the apparatus includes:
a first receiving unit 500, configured to receive a service resource request message, in which the service resource request message is used to request allocating of required resource to a service;
a judging unit 504, configured to judge whether managed idle resource satisfies requirement of the service according to the service resource request message;
a determining unit 506, configured to determine the number of resource requiring resource delegation adjustment if a judgment result of the judging unit is that the managed idle resource is not able to satisfy the requirements of the service;
a sending unit 508, configured to send a resource delegation adjustment request message to a second network device, in which the message is used to request performing of resource delegation adjustment on resource managed by itself; and
a carrying unit 510, configured to carry resource delegation information in the resource delegation adjustment request message sent by the sending unit, in which the resource delegation information includes: resource identifier of resource on which the first network device requires performing of delegation adjustment, the number of the resource requiring the delegation adjustment, and priority information of the service.

The carrying unit 510 may be integrated in the sending unit 508, or may be connected to the sending unit for work.

The resource delegation information further includes priority information of services admitted by the first network device, and/or resource information.

The apparatus further includes: a second receiving unit 512, configured to receive a resource delegation adjustment response message returned by the second network device; and
an adjusting unit 514, configured to update the number of the managed resources and allocate resource to the service according to the resource delegation adjustment response message.

It can be seen from the specific implementation solution provided by the embodiment of the present invention that, the apparatus for adjusting the resource delegation in the network according to the embodiment of the present invention can solve the problem of the existing technical solution that the resource usage of the high-priority services is not able to be satisfied in the case of insufficient resource, which improves the utilization efficiency of the resource, and enhances user experience.

FIG. 6 is a schematic structural view of a system for adjusting resource delegation in a network according to an embodiment of the present invention, which is used to implement the method embodiments of the present invention. The system includes:
a first network device 600, configured to receive a service resource request message, in which the service resource request message is used to request allocating of required resource to a service; determine the number of resource requiring resource delegation adjustment when idle resource managed by the first network device 600 is not able to satisfy requirements of the service; and send a resource delegation adjustment request message to a second network device, in which the request message is used to request the second network device to perform resource delegation adjustment on resource managed by the first network device, the resource delegation adjustment request message carries resource delegation information, and the resource delegation information includes: resource identifier of resource on which the first network device requires performing of delegation adjustment, the number of the resource requiring the delegation adjustment, and priority information of the service; and
the second network device 602, configured to receive the resource delegation adjustment request message sent by the first network device, determine a service that is capturable by the resource delegation adjustment request according to the resource delegation adjustment request message; and release resource occupied by the service, and delegate the released resource to the first network device for management through a resource delegation adjustment response message.

The resource delegation information further includes priority information of services admitted by the first network device, and/or resource information.

The specific interaction process between the first network device and the second network device is as shown in FIG. 3, which is not repeated herein.

The first network device and the second network device manage the network resource together by means of resource delegation, and the network devices may be NRMs, or other network devices. In specific implementation, the first network device may be a device delegating resource, for example, Delegating NRM, the second network device then is a device to which resource is delegated, and the network device is a Delegated NRM correspondingly. The first NRM may also be the Delegated NRM, and the second NRM then is the Delegating NRM correspondingly.

The system for adjusting resource delegation in a network according to the embodiment of the present invention can solve the problem of the existing technical solution that the resource usage of the high-priority services is not able to be satisfied in the case of insufficient resource, which improves the utilization efficiency of the resource, and enhances user experience.

The above descriptions are merely exemplary embodiments of the present invention, but the protection scope of the present invention is not limited thereto. Any variations or replacements that can be easily thought of by persons skilled in the art without departing from the technical scope of the present invention shall fall within the protection scope of the present invention. Therefore, the protection scope of the present invention shall be defined by the appended claims.

## Claims

1. A method for adjusting resource delegation in a network, comprising:
receiving a resource delegation adjustment request message sent by a first network device, wherein the request message is used to perform resource delegation adjustment on resource managed by the first network device, the resource delegation adjustment request message carries resource delegation information, and the resource delegation information comprises: resource identifier of resource on which the first network device requires performing of delegation adjustment, the number of the resource requiring the delegation adjustment, and priority information of a service which requests resource;
determining a service that is capturable by the service which requests the resource according to the resource delegation information carried in the request message; and
releasing resource occupied by the service that is capturable, and delegating the released resource to the first network device for management through a resource delegation adjustment response message.

2. The method according to claim 1, wherein before the determining the service that is capturable by the service which requests resource according to the resource delegation information carried in the request message, the method comprises:
determining that managed idle resource is not able to satisfy the resource delegation adjustment request.

3. The method according to claim 2, wherein the delegating the released resource to the first network device for management through the resource delegation adjustment response message comprises: delegating the managed idle resource and the released resource to the first network device for management through the resource delegation adjustment response message.

4. The method according to claim 3, wherein the resource delegation information further comprises priority information of services admitted by the first network device, and/or resource information.

5. A method for adjusting resource delegation in a network, comprising:
receiving a service resource request message, wherein the service resource request message is used to request allocating of required resource to a service;
judging whether managed idle resource satisfies requirement of the service according to the service resource request message;
determining the number of resource requiring resource delegation adjustment if the managed idle resource is not able to satisfy the requirement of the service; and
sending a resource delegation adjustment request message to a second network device, wherein the request message is used to request performing of the resource delegation adjustment on resource managed by a first network device, the resource delegation adjustment request message carries resource delegation information, and the resource delegation information comprises: resource identifier of resource on which the first network device requires performing of delegation adjustment, the number of the resource requiring the delegation adjustment, and priority information of the service.

6. The method according to claim 5, wherein the resource delegation information further comprises priority information of services admitted by the first network device, and/or resource information.

7. The method according to claim 5 or 6, further comprising:
receiving a resource delegation adjustment response message returned by the second network device; and
updating the number of the managed resource and allocating resource to the service according to the response message.

8. An apparatus for adjusting resource delegation in a network, comprising:
a receiving unit, configured to receive a resource delegation adjustment request message sent by a first network device, wherein the request message is used to request performing of resource delegation adjustment on resource managed by the first network device, the resource delegation adjustment request message carries resource delegation information, and the resource delegation information comprises: resource identifier of resource on which the first network device requires performing of delegation adjustment, the number of the resource requiring the delegation adjustment, and priority information of service which requests resource;
a first determining unit, configured to determine a service that is capturable by the service which requests resource according to the resource delegation information carried in the request message; and
a delegation obtaining unit, configured to release resource occupied by the service that is capturable, and delegate the released resource to the first network device for management through a resource delegation adjustment response message.

9. The apparatus according to claim 8, further comprising:
a second determining unit, configured to determine that managed idle resource is not able to satisfy the resource delegation adjustment request,
wherein the delegation obtaining unit is further configured to delegate the managed idle resource and the released resource to the first network device for management through the resource delegation adjustment response message.

10. The apparatus according to claim 8, wherein the resource delegation information further comprises priority information of services admitted by the first network device, and/or resource information.

11. An apparatus for adjusting resource delegation in a network, comprising:
a first receiving unit, configured to receive a service resource request message, wherein the service resource request message is used to request allocating of required resource to a service;
a judging unit, configured to judge whether managed idle resource satisfies requirement of the service according to the service resource request message;
a determining unit, configured to determine the number of resource requiring resource delegation adjustment if a judgment result of the judging unit is that the managed idle resource is not able to satisfy the requirements of the services;
a sending unit, configured to send a resource delegation adjustment request message to a second network device, wherein the message is used to request performing of resource delegation adjustment on managed resource; and
a carrying unit, configured to carry resource delegation information in the resource delegation adjustment request message sent by the sending unit, wherein the resource delegation information comprises: resource identifier of the resource requiring delegation adjustment, the number of the resource requiring the delegation adjustment, and priority information of the services.

12. The apparatus according to claim 11, wherein the resource delegation information further comprises priority information of admitted services, and/or resource information.

13. The apparatus according to claim 11 or 12, further comprising:
a second receiving unit, configured to receive a resource delegation adjustment response message returned by the second network device; and
an adjusting unit, configured to update the number of the managed resource and allocate resource to the service according to the response message.

14. A system for adjusting resource delegation in a network, comprising:
a first network device, configured to receive a service resource request message, wherein the service resource request message is used to request allocating of required resource to a service; determine the number of resource requiring resource delegation adjustment when idle resource managed by the first network device is not able to satisfy requirements of the services; and send a resource delegation adjustment request message to a second network device, wherein the request message is used to request the second network device to perform resource delegation adjustment on resource managed by the first network device, the resource delegation adjustment request message carries resource delegation information, and the resource delegation information comprises: resource identifier of resource on which the first network device requires performing of delegation adjustment, the number of the resource requiring the delegation adjustment, and priority information of the service; and
the second network device, configured to receive the resource delegation adjustment request message sent by the first network device, determine a service that is capturable by the service according to the resource delegation information carried in the request message; and release resource occupied by the service that is capturable, and delegate the released resource to the first network device for management through a resource delegation adjustment response message.

15. The system according to claim 14, wherein the resource delegation information further comprises priority information of services admitted by the first network device, and/or resource information.
